Europäisches Patentamt

European Patent Office

Office européen des brevets

(11) Publication number: **0 267 336**

**A1**

(12) **EUROPEAN PATENT APPLICATION**

(21) Application number: 86308879.5

(22) Date of filing: **13.11.86**

(51) Int. Cl.4: **C08J 9/08** , C08L 67/06 , C08K 5/05

(43) Date of publication of application:
**18.05.88 Bulletin 88/20**

(84) Designated Contracting States:
**AT BE CH DE ES FR GB GR IT LI LU NL SE**

(71) Applicant: VALVOLINE OIL & CHEMICALS LTD.
**2620 Royal Windsor Drive**
**Mississauga Ontario L5J 4E7(CA)**

(72) Inventor: **Titti, Otello U.**
**1214 Larny Court**
**Mississauga Ontario L4W 3N4(CA)**
Inventor: **Cesta, Patrick P.**
**3462 Corliss Crescent**
**Mississauga Ontario L4T 2Z4(CA)**
Inventor: **Mitsopoulos, Tom H.**
**584 Palmerston Avenue**
**Toronto Ontario M6G 2P7(CA)**
Inventor: **Wheeler, Alan G.**
**504 Vanguard Crescent**
**Oakville Ontario L6L 5G7(CA)**

(74) Representative: **Lambert, Hugh Richmond et al**
**D. YOUNG & CO. 10 Staple Inn**
**London, WC1V 7RD(GB)**

(54) Production of plastic foam material with gas-release control agent.

(57) A process for the production of plastic foam material includes forming a liquid mixture by mixing an unsaturated resin, a catalyst operable to cause curing of the unsaturated resin, a promoter operable to activate the catalyst, a gas-releasing salt, and an acid operable to cause the release of gas from the salt so that the liquid mixture foams and cures by gelling and subsequent hardening. Included in the mixture is a volatile liquid gas-release control agent which volatilizes during curing to maintain gas release passages open in the foam and thereby permit release of gases from the foam during hardening after gellation at least until the foam is structurally stable.

EP 0 267 336 A1

## PRODUCTION OF PLASTIC FOAM MATERIAL WITH GAS-RELEASE CONTROL AGENT

This invention relates to the production of plastic foam material.

Plastic foams have been known for many years, and are conventionally manufactured by forming a liquid mixture by mixing resin, a catalyst operable to cause curing of the unsaturated resin, a promoter operable to activate the catalyst, a gas-releasing salt and an acid operable to cause the release of gas from the salt. The liquid mixture foams and cures by gelling and subsequent hardening.

Post-gellation gassing has long been a problem in such processes. The gas continues to be released after the gellation stage, that is to say while the mixture is hardening, and such gas usually adversely affects the end product. For example, the gas may cause the internal structure and external surface of the end product to be non-uniform and non-reproducible. Also, when the foam is structural foam, the gas may cause separation from another structure with which the structural foam is intended to be bonded.

It is therefore an object of the present invention to provide an improved process for the production of plastic foam material in which the problem of post-gellation gassing is reduced.

The present invention is based on the discovery that the harmful effect of post-gellation gassing is reduced if there is added to the mixture a volatile liquid gas-release control agent which volatilizes during curing and appears to maintain gas-release passages open in the foam and thereby permit release of gas from the foam during hardening after gellation, i.e. during cross-linking, at least until the foam is structurally stable.

The reason for the success of the invention is not properly understood. However, since the curing reaction is exothermic, with the main exothermic action occurring during hardening after gellation, i.e. during cross-linking, it may be that such heat release after gellation causes the gas-release control agent to be volatilized to a sufficient extent to maintain gas-release passages in the foam open at least until the foam is structurally stable.

The gas-release control agent in accordance with the invention may be caused to keep the foam open to permit gas-release during hardening without causing disruption and consequent breaking of the structure into pieces.

It has also been discovered that the use of the gas-release control agent in accordance with the invention has other advantages. For example, the foam density can be more accurately controlled, and may also be varied by use of the gas-release control agent. When the gas-release control agent is not used, the internal structure and external surface of the end product may be non-uniform and non-reproducible. When the gas-release control agent is used, the internal structure and external surface are substantially uniform and reproducible.

The invention is especially useful where the foam is a filled foam (such as polyester structural foam) used to reinforce a shaped article, for example an acrylic bath tub, the liquid mixture being applied to the shaped article and allowed to cure so that the cured foam is bonded to the article.

The liquid-gas-release control agent in accordance with the invention should be volatile during the curing reaction and non-reactive, i.e. non-linkable, with the remainder of the mixture. When mixing takes place at ambient temperature to produce an exothermic reaction, it has been found that the gas-release control agent should have a boiling point from about 40 to about 80°C.

The gas-release control agent may be methanol or isopropyl alcohol. The amount added may be from about 0.25 to about 10% by weight of the mixture, advantageously from about 0.75 to about 3%.

The invention is advantageously carried out by mixing two liquid components. The first component may typically include one or more resins, one or more monomers, one or more promoters, one or more inhibitors, a thixotropic agent, the gas-release control agent in accordance with the invention, and one or more fillers if desired. The second component may typically comprise one or more resins, a surfactant, a thixotropic agent, water, acid and catalyst. If desired, fire retardant or chemical resistant resins may be used.

For the first component, the resin is preferably an unsaturated polyester resin and may, for example, comprise an orthophthalic, isophthalic, halogenated type, or vinyl ester resin. The monomer may comprise styrene or its derivatives, methacrylate, or vinyl toluene. The promoter may comprise an amine or a metal drier. The inhibitor may comprise a quinone or hydroquinone. The thixotropic agent may comprise fumed or precipitated silica or clay. The filler may comprise alumina trihydrate, clay or talc.

For the second component, the resin may for example be as in the first component. The surfactant may comprise an ionic or non-ionic silicone. The thixotropic agent may be as in the first component. The acid may be citric acid, tartaric acid or acetic acid. The catalyst may comprise a peroxide, a benzoyl compound, or methyl ethyl ketone.

The two liquid components are typically mixed with a volume ratio of from about 0.5:1 to about 2:1 depending upon the presence or otherwise of fillers or on final desired properties. A preferred ratio is about 1.4:1. The components may be mixed by manual operation or by mixing equipment. The gel time may be from about 1 to about 10 minutes, typically about 3 minutes, and the total curing time may be from about 10 to about 60 minutes.

The gas-releasing salt may be a carbonate or bi-carbonate, for example, calcium, sodium, potassium carbonate or bi-carbonate. The aqueous acid may be citric acid or other suitable organic or inorganic acid. The acid may be present in an amount of from about 0.75 to about 5%, preferably from about 1 to about 2% by weight of the mixture.

Tests were carried out with the production of a filled polyester structural foam, with carying amounts of gas-release control agent (methanol) being added in accordance with the invention in different tests, and the densities of the foam products were measured. The results were as follows:

| methanol (wt %) | 0 | 0.75 | 1.5 | 3.0 |
|---|---|---|---|---|
| density (lb./cu.ft.) | 58 | 45 | 49 | 77 |
| (density – kg/m$^3$) | (928) | (720) | (784) | (1232) |

For a given composition, the amount of gas-release control agent used may be varied to produce a minumum density.

A composition for the production of polyester structural foam with mixture at room temperature and incorporating a gas-release control agent in accordance with the invention will now be given, by way of example only, in Table I. The two liquid components A and B are mixed in the ratio of 1.4:1 by volume respectively.

The amount of each item is given as a percentage by weight of the respective liquid component A or B.

### TABLE I

|  | A% | B% |
|---|---|---|
| AROPOL C100 (resin) | 18.5 | 73.0 |
| AROPOL C135 (resin) | 4.0 | 12.0 |
| STYRENE (monomer) | 17.0 | – |
| DIMETHYL ANILINE (promoter) | 0.3 | – |
| DI-METHYL P-TOLUIDINE (promoter | 0.3 | – |
| CABOSIL (thixotropic agent) | – | 1.0 |
| METHANOL | 2.4 | – |
| CALCIUM CARBONATE (filler | 7.5 | – |
| DC 193 (surfactant) | – | 1.0 |
| CITRIC ACID | – | 3.5 |
| WATER | – | 5.4 |
| ALUMINA TRIHYDRATE (filler) | 50.0 | – |
| BENZOYL PEROXIDE (catalyst) | – | 4.1 |

(AROPOL C100 and AROPOL C135 are trade marks of Ashland Chemicals for polyester resins)

(CABOSIL is a trade mark of Cabon Company for a thixotropic agent comprising fumed silica)

(DC 193 is a trade mark of Dow Company for a surfactant).

Polyester structural foam was first produced in accordance with the composition given in Table A but the gas-control release agent (methanol) in accordance with the invention was omitted. The end product has a non-uniform internal structure and external surface, and had a density of 58 lb/cu. ft. (928 kg/m³).

A test was repeated using methanol as specified in Table A, and the end product had a substantially uniform internal structure and external surface, thereby demonstrating the advantages of using a gas release control agent in accordance with the invention. The density was 45 lb/cu. ft. (720 kg/m³).

Other examples and embodiments of the invention will be readily apparent to a person skilled in the art, without departing from the scope of the invention as herein defined.

**Claims**

1. A process for the production of a foamed plastics material, which comprises incorporating into a head curable, exothermic unsaturated resin composition, comprising an unsaturated resin, a catalyst operable to cause curing of the unsaturated resin and a catalyst promoter, a gas-releasing salt and an acid capable of reacting therewith to release said gas in situ in said composition during the curing thereof, said acid component comprising citric acid, tartaric acid or acetic acid, characterised in that there is also incorporated into the composition methanol and/or isopropanol as a volatile, liquid gas-release control agent, which volatilises and evaporates from the composition during said curing and as a result of said exotherm.

2. A process according to claim 1, characterised in that the unsaturated resin composition comprises an unsaturated polyester resin.

3. A process according to claim 1 or 2, characterised in that the gas-release control agent constitutes from 0.25 to 10% by weight of the total composition.

4. A process according to claim 3, characterised in that the gas-release control agent constitutes from 0.75 to 3% by weight of the total composition.

5. A process according to any one of the preceding claims, characterised in that the gas-releasing salt is a carbonate or a bi-carbonate.

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CA-A-1 167 600  (S. OSWITCH)<br>* Claims  1,2,7,12,13;  page  3, lines 16-25; examples * | 1-5 | C 08 J    9/08<br>C 08 L   67/06<br>C 08 K    5/05 |
| X | DE-A-2 533 922  (VIANOVA KUNSTHARZ)<br>*    Claims    1,5;    examples Ib,2b,3b,4b,5b,6b * | 1-5 | |
| A | GB-A-2 153 362  (SCOTT BADER CO.)<br>* Claims * | 1 | |

TECHNICAL FIELDS
SEARCHED (Int. Cl.4)

C 08 J

The present search report has been drawn up for all claims

| Place of search | Date of completion of the search | Examiner |
|---|---|---|
| THE HAGUE | 06-07-1987 | HALLEMEESCH A.D. |

EPO Form 1503 03 82